# EUROPÄISCHE PATENTANMELDUNG

(11) **EP 1 635 572 A2**
(43) Veröffentlichungstag der Anmeldung: **15.03.2006**
(21) Anmeldenummer: 05014249.6
(22) Anmeldetag: 30.06.2005
(51) Int. Cl.: H04N 7/18, H04N 7/16, B60R 1/00

(54) **Kamerasystem**

(30) Priorität: 08.09.2004 DE 202004013984 U
(71) Anmelder: MEKRA Lang GmbH & Co. KG, 90765 Fürth (DE)
(72) Erfinder: Lang, Heinrich, 91465 Ergersheim (DE); Emmert, Harald, 91438 Bad Windsheim (DE); Kiesenbauer, Hermann, 91465 Ergersheim (DE); Witzke, Michael, 91522 Ansbach (DE)
(74) Vertreter: Winter, Brandl, Fürniss, Hübner Röss, Kaiser, Polte Partnerschaft Patent- und Rechtsanwaltskanzlei

(57) **Zusammenfassung**

Ein Kamerasystem umfaßt: wenigstens eine Kamera (1a, 1b) zur Aufnahme und drahtlosen Übertragung von Bildsignalen auf einem Übertragungskanal, einen Empfänger (2) zum Empfangen und Darstellen der Bildsignale von der wenigstens einen Kamera, wobei der Empfänger ein Zuweisungsmittel zum Zuweisen einer eindeutigen Identifikation an die wenigstens eine Kamera, und ein erstes Identifikationsmittel zum Freigeben der Bildsignale nur dann, wenn eine zusammen mit den Bildsignalen gesendete Identifikation derjenigen entspricht, die der wenigstens einen Kamera zugewiesen ist, umfasst.

## Beschreibung

Die vorliegende Erfindung betrifft mobiles Kamerasystem mit drahtloser Signalübertragung, insbesondere für Nutzfahrzeuge, sowie ein Verfahren für ein solches System.

Bei der Überwachung von schwer oder nicht einsehbaren Bereichen werden häufig Kamerasysteme eingesetzt. Beispielsweise aus der deutschen Patentanmeldung mit dem Aktenzeichen 10234483.3 der Anmelderin ist es bekannt, am Heck eines Lastkraftwagens eine Videokamera zur Überwachung des rückwärtigen Bereichs vorzusehen, deren Bild auf einem Monitor es dem Fahrer bei Rückwärtsfahrt ermöglicht, Laderampen rückwärts anzusteuern und Hindernisse hinter dem Fahrzeug rechtzeitig zu erkennen. Gleichermaßen können Kameras zur Überwachung sogenannter "Toter Winkel" oder von Bereichen vor dem Fahrzeug eingesetzt werden.

Die Bildsignale der Kamera werden dabei herkömmlicherweise mittels durchgehender Datenleitungen, insbesondere metallischen oder Glasfaserkabeln übertragen. Diese sind nicht nur aufwendig zu installieren, insbesondere bei der Nachrüstung fertiger Fahrzeuge, sondern darüber hinaus auch für Beschädigungen anfällig. Insbesondere bei Nutzfahrzeugen mit abkoppelbaren zugteilen muß die Datenleitung trennbar sein. Der hierzu notwendige Stecker bildet eine weitere Schwachstelle, die anfällig für Beschädigungen oder Störungen ist und das System verteuert.

Daher ist es, beispielsweise aus der EP 1 273 478 A1 der Anmelderin, bekannt, die Bildsignale der Kamera drahtlos per elektromagnetischen Wellen, i.e. als Funksignale zu übertragen. Auch Steuersignale für die Kamera (Ein-/Ausschalten, Schwenken, Fokussieren o.ä.) können drahtlos übertragen werden.

Dabei besteht jedoch das Problem, daß andere Funksignale die Bild- und/oder Steuersignale des Kamerasystems stören können. Sind beispielsweise mehrere Kameras an einem Nutzfahrzeug angeordnet und übertragen bzw. empfangen ihre Bild- bzw. Steuersignale auf dem gleichen Übertragungskanal, führt dies zu einer Fehlfunktion.

Aufgabe der vorliegenden Erfindung ist es daher, ein Kamerasystem bzw. ein Verfahren mit drahtloser Signalübertragung zur Verfügung zu stellen, bei der eine Beeinflußung des Signals von und/oder zur Kamera durch andere Sender verhindert wird.

Diese Aufgabe wird durch den Gegenstand des Anspruchs 1 bzw. 9 gelöst.

Ein erfindungsgemäßes Kamerasystem umfaßt wenigstens eine Kamera zur Aufnahme und drahtlosen Übertragung von Bildsignalen auf einem Übertragungskanal sowie einen Empfänger zum Empfangen und Darstellen der Bildsignale von der wenigstens einen Kamera.

Der Empfänger umfaßt seinerseits ein Zuweisungsmittel zum Zuweisen einer eindeutigen Identifikation an die wenigstens eine Kamera und ein erstes Identifikationsmittel zum Freigeben der Bildsignale nur dann, wenn eine zusammen mit den Bildsignalen gesendete Identifikation derjenigen entspricht, die der wenigstens einen Kamera zugewiesen ist. Die wenigstens eine Kamera umfaßt ein Mittel zum Speichern der zugewiesenen Identifikation und zum Senden dieser Identifikation zusammen mit den Bildsignalen aufweist.

Bei Aktivierung der Kamera weist das Zuweisungsmittel dieser eine eindeutige Identifikation, beispielsweise eine Identifikationsnummer, einen Namen, eine Kennung oder dergleichen zu. Diese wird in der Kamera gespeichert und zusammen mit ihren Bildsignalen an den Empfänger gesendet.

Im Empfänger erkennt das erste Identifikationsmittel, ob die zusammen mit den Bildsignalen empfangene Identifikation derjenigen entspricht, die der Kamera zugewiesen ist, von der Bildsignale empfangen werden sollen. Nur falls dies der Fall ist, wird die Übertragung freigegeben, die Bildsignale können am Empfänger dargestellt werden.

Falls nur oder zusätzlich eine weitere Kamera auf dem Übertragungskanal Bildsignale sendet, wird dies anhand der falschen Identifikation, die mit diesen Bildsignalen gesendet wird, von dem ersten Identifikationsmittel als Fehler erkannt und entsprechend reagiert. Beispielsweise kann eine Fehlermeldung ausgegeben werden, das System kann abgeschaltet oder auf einen anderen Übertragunsgkanal umgeschaltet werden.

Das gleiche Prinzip kann auch bei der Übertragung von Steuersignalen an die Kamera angewandt werden, so daß sichergestellt ist, daß eine Kamera nur auf störungsfrei übertragene und nur an sie gerichtete Steuersignale reagiert.

Weitere Aufgaben, Merkmale und Vorteile ergeben sich aus den Unteransprüchen und den nachfolgend beschriebenen Ausführungsbeispielen. Hierzu zeigt:

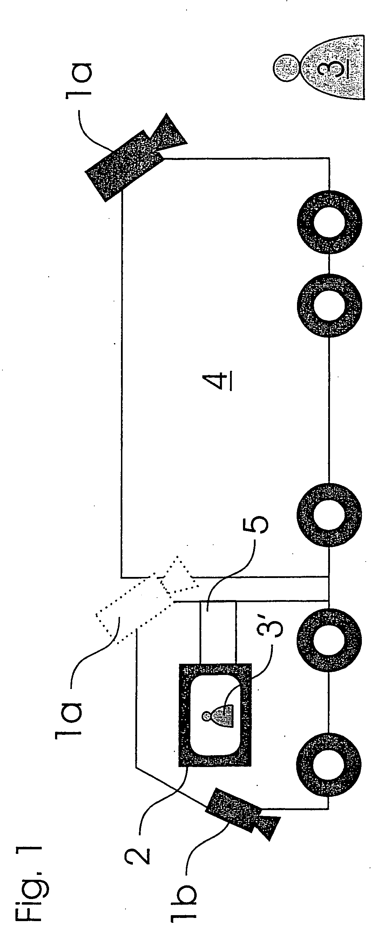

Fig. 1 einen LKW mit einem Kamerasystem gemäß einer Ausführung der vorliegenden Erfidnung.

In Fig. 1 ist ein Kamerasystem gemäß einer Ausführung der vorliegenden Erfindung an einem Lastkraftwagen 4 angeordnet. Gleichermaßen kann das Kamerasystem auch bei landwirtschaftlichen Nutzfahrzeugen, Baumaschinen oder dergleichen verwendet werden. Auch bei der Überwachung von Prozeßabläufen oder Bereichen im industriellen, Heim- oder Freizeitbereich kann ein erfindungsgemäßes Kamerasystem verwendet werden. Das dargestellte Ausführungsbeispiel zeigt insofern nur exemplarisch eine Anwendung.

Das dargestellte Kamerasystem umfaßt eine erste Kamera 1a, die oben am Heck des Anhängers des LKWs mittels einer Schnellmontagevorrichtung (nicht dargestellt) lösbar befestigt ist. Als Schnellmontagevorrichtung sind beispielsweise Bajonett- oder Schnappverschlüsse, Magnethalterungen oder verschraubungen geeignet.

Alternativ kann die erste Kamera 1a auch mittels der Schnellmontagevorrichtung oben am Führerhaus des Zugteils des LKWs angeordnet werden, wie dies in Fig. 1 strichliert dargestellt ist. Damit ist es vorteilhaft möglich, auch bei abgekoppeltem Anhänger den rückwärtigen Bereich des LKWs zu überwachen.

Am LKW 4 ist weiterhin eine zweite Kamera 1b zur Überwachung des vom Fahrer nicht direkt einzusehenden Bereichs unmittelbar vor dem LKW angeordnet. Auch diese Kamera kann mittels oben beschriebener Schnellmontagevorrichtung befestigt sein. Alternativ kann auch die erste Kamera 1a im Fahrbetrieb als zweite Kamera angeordnet und vor dem Rückwärtsrangieren mittels Schnellmontagevorrichtung in der in Fig. 1 dargestellten Position angeordnet werden.

Im Führerhaus des LKWs ist im Sichtbereich des Fahrers ein Empfänger mit Monitor 2 angeordnet. Auf letzterem können die von den Kameras aufgenommenen Bilder dargestellt werden,- in Fig. 1 das Bild 3' eines Hindernisses 3 hinter dem LKW.

Nachfolgend wird der Betrieb eines Kamerasystems gemäß einer Ausführung der vorliegenden Erfindung erläutert.

Zunächst werden eine oder mehrere Kameras des Systems aktiviert. Dies kann zum einen dadurch geschehen, daß die Energieversorgung des Nutzfahrzeuges durch Betätigen eines Zündschalters aktiviert wird. Gleichermaßen kann eine Kamera dadurch aktiviert werden, daß eine bestimmte Überwachungssituation erkannt wird. Beispielsweise erkennt das System gemäß einer Ausführung der vorliegenden Erfindung das Einlegen des Rückwärtsganges, i.e. daß der rückwärtige Bereich hinter dem LKW zu überwachen ist, und aktiviert Kamera 1a.

In einer bevorzugten Ausführung der vorliegenden Erfindung sind die Kameras zunächst in einer Ladestation 5 angeordnet, die bevorzugt in der Nähe des Empfängers 2 angeordnet ist. Bei Nichtgebrauch können vorteilhaft Akkumulatoren zur Energieversorgung der Kameras von der Ladestation 5 geladen werden. Die Aktivierung einer Kamera geschieht hier durch die Entnahme der Kamera aus der Ladestation, die anschließend mittels Schnellmontagevorrichtung an ihrer vorgesehenen Position befestigt wird.

Bei der Aktivierung vergibt ein Zuweisungsmittel (nicht dargestellt) im Empfänger 2 eine Identifikation, die für jede aktivierte Kamera bijektiv eindeutig ist, i.e. jeder aktivierten Kamera ist ein eindeutiger Identifizierer zugeordnet und umgekehrt. Bevorzugt ist die Identifikation eine Identifikationsnummer, beispielsweise das in Fig. 1 dargestellte Bezugszeichen. Diese Identifikation wird in der jeweiligen Kamera gespeichert.

Die aktivierte Kamera nimmt nun Bilder auf und sendet auf einem vorgegebenen Übertragungskanal entsprechende Bildsignale an den Empfänger 2. Der Übertragungskanal kann zusammen mit der Identifikation bei Aktivierung zugewiesen oder separat gewählt werden. Zusammen mit dem Bildsignal sendet die Kamera ihre Identifikation, beispielsweise periodisch mit vorgegebenen Zeitabständen. Gleichermaßen kann die Kamera die Identifikation auch quasi-kontinuierlich senden, beispielsweise mittels Multiplexverfahren.

Der Empfänger 2 empfängt die von der aktivierten Kamera gesendeten Bildsignale zusammen mit der Identifikation, beispielsweise der Identifikationsnummer. Anhand der Identifikation erkennt ein erstes Identifikationsmittel (nicht dargestellt) im Empfänger 2, ob die Bildsignale von der richtigen Kamera stammen, die auf dem empfangenen Übertragungskanal sendet.

Stimmt die empfangene Identifikation mit derjenigen überein, die das Zuweisungsmittel der Kamera zugeordnet hat, von der Bildsignale empfangen werden sollen, schaltet das erste Identifikationsmittel die Übertragung frei, i.e. die von der Kamera aufgenommenen Bilder werden auf dem Monitor dargestellt.

Stimmt dagegen die empfangene Identifikation nicht mit derjenigen überein, die das Zuweisungsmittel der Kamera zugeordnet hat, von der Bildsignale empfangen werden sollen, erkannt das erste Identifikationsmittel, daß die Übertragung der Bildsignale nicht korrekt ist. In diesem Fall weist das erste Identifikationsmittel mittels eines Steuersignals, das an die Kamera gesendet wird, diese an, auf einem anderen Übertragungskanal zu senden. Gleichermaßen kann das erste Identifikationsmittel auch die fehlerhafte Übertragung anzeigen und die Übertragung unterbrechen.

Alternativ oder zusätzlich kann der Empfänger auch Steuersignale an die Kameras senden, um beispielsweise die Aufnahme und Übertragung von Bildern zu beginnen oder zu beenden (die Kamera nimmt dann nicht schon bei ihrer Aktivierung Bilder auf) oder den Sichtbereich der Kamera durch Schwenken, Zoomen o.ä. zu ändern. Um zu gewährleisten, daß nur die jeweils angesprochene Kamera die empfangenen Steuersignale verarbeitet, kann der Empfänger zusammen mit den Steuersignalen die Identifikation der angesprochenen Kamera senden. Dies kann auf gleiche weise geschehen wie bei der Übertragung der Bildsignale zusammen mit der Identifikation.

Ein zweites Identifikationsmittel (nicht dargestellt) in der jeweiligen Kamera erkennt, ob die Steuersignale für die Kamera bestimmt sind. Nur wenn dies der Fall ist, werden die Steuersignale umgesetzt.

Im in Fig. 1 gezeigten Ausführungsbeispiel können die beiden Kameras 1a, 1b auf zwei verschiedenen Übertragungskanäle Bildsignale senden und auf zwei verschiedenen Übertragungskanälen Steuersigale empfangen.

Kamera 1a wird dadurch aktiviert, daß sie aus der Ladestation 5 entnommen und mittels Schnellmontagevorrichtung am Heck des LKWs 4 angeordnet wird. Dabei wird ihr vom zuweisungsmittel die Identifikation "1a" und der erste Übertragungskanal für Bild- und Steuersignale zugewiesen.

Kamera 1b ist fest am vorderen Bereich des LKWs montiert, für sie ist vorab ebenfalls der erste Übertragungskanal gewählt. Kamera 1b wird durch Starten des LKWs, i.e. Betätigen des Zündschalters, aktiviviert. Dabei wird ihr vom Zuweisungsmittel die Identifikation "1b" zugewiesen. Kamera 1b sendet während des Fahrbetriebs kontinuierlich Bildsignale zusammen mit ihrer Identifikation auf dem ersten Übertragungskanal.

Empfänger 2 empfängt die von Kamera 1b gesendeten Bildsignale. Das erste Identifikationsmittel erkennt anhand der mit diesen zusammen gesendeten Identifikation "1b", daß sie nur von der Kamera 1b stammen, deren Bilder während des normalen Fahrbetriebs auch auf dem Monitor dargestellt werden sollen, und insofern fehelrfrei übertragen werden. Es gibt daher die Übertragung frei, der Monitor zeigt die Bilder von Kamera 1b.

Bei Einlegen des Rückwärtsganges soll Kamera 1a Bilder übertragen, um den hinteren Fahrzeugbereich überwachen zu können. Hierzu wird auf dem ersten Steuersignal-Übertragungskanal ein entsprechendes Signal zusammen mit der Identifikation "1a" vom Empfänger 2 gesendet.

Die Kamera 1a empfängt dieses Signal. Ihr zweites Identifikationsmittel erkennt anhand der Identifikation, daß das Steuersignal für die Kamera bestimmt ist und gibt dessen Umsetzung frei. Kamera 1a beginnt, Bildsignale zusammen mit ihrer Identifikation "1a" auf dem ersten Übertragungskanal zu senden.

Auch Kamera 1b empfängt das Steuersignal zusammen mit der Identifikation "1a" auf dem ersten Übertragungskanal. Ihr zweites Identifikationsmittel erkennt, daß das Steuersignal nicht für die Kamera bestimmt ist und gibt dessen Umsetzung daher nicht frei - Kamera 1b wird von dem Steuersignal nicht angesprochen, sie sendet ohnehin während des gesamten Fahrbetriebs auf dem ersten Bildsignal-Übertragungskanal.

Nun senden sowohl Kamera 1a als auch 1b auf dem ersten Bildübertragungskanal, die Bildsignale sind daher gestört und zur Darstellung des Kamerabildes nicht geeignet. Das erste Identifikationsmittel in Empfänger 2 erkennt, daß auf dem ersten Übertragungskanal (auch) die falsche Identifikation "1b" zusammen mit den Bildsignalen übertragen wird - es gibt die Übertragung, die durch Überlagerung der beiden Signale gestört ist, nicht frei. Stattdessen übermittelt es an Kamera 1a auf dem ersten Steuersigal-Übertragungskanal zusammen mit der Identifikation "1a" den Befehl, auf den zweiten Übertragungskanal zu wechseln.

Während dieser Steuerbefehl aufgrund der Identifikation "1a" vom zweiten Identifikationsmittel der zweiten Kamera 1b ignoriert wird und diese daher weiterhin auf dem ersten Übertragungskanal bleibt, erkennt das zweiten Identifikationsmittel der ersten Kamera 1a, daß die Kamera angesprochen ist, und gibt daher die Umsetzung des Befehl frei. Kamera 1a schaltet daher auf den zweiten Übertragungskanal um und sendet auf diesem zusammen mit ihrer Identifikation "1a" ihre Bildsignale.

Auch der Empfänger, der den Befehl zum Umschalten gegeben hat, schaltet auf den zweiten Übertragungskanal, empfängt dort die (nicht mehr von der zweiten Kamera 1b gestörten) Bildsignale der ersten Kamera 1a. Da mit diesen Bildsignalen (nur) die Identifikation "1a" übertragen wird, erkennt das erste Identifikationsmittel im Empfänger 2, daß die Übertragung von der richtigen Kamera stammt und durch keine weitere Kamera gestört wird. Es gibt daher die Übertragung frei, im Monitor werden, wie in Fig. 1 gezeigt, bei Rückwärtsfahrt die Bilder der Kamera 1a vom Hindernis 3 hinter dem LKW dargestellt.

Ebenso wie die in Fig. 1 dargestellte zweite Kamera 1b auf demselben LKW 4 kann auch eine Bildsignale übertragende Kamera, die - beispielsweise an einer Laderampe - fest installiert oder auf einem anderen LKW angeordnet ist, die Bild- und/oder Steuersignalübertragung stören, wenn sich der LKW 4 in der Nähe der fest installierten anderen Kamera oder des anderen LKWs mit einer solchen Kamera befindet und diese andere Kamera auf dem selben Übertragungskanal wie diejenige des erfindungsgemäßen Kamerasystems sendet bzw. empfängt. In dieser Situation gewährleistet auch in diesem Fall, daß im Empfänger 2 des LKWs 4 nur diejenigen Bildsignale freigegeben und angezeigt werden, die anhand der mitgesendeten Identifikation als von der richtigen Kamera gesendet erkannt werden.

Das erfindungsgemäße Kamerasystem stellt daher sicher, daß auf einem Bild- und/oder Steuersignal-Übertragungskanal stets nur die Bild- bzw. Steuersignale von bzw. für die adressierte Kamera übertragen werden. Es gewährleistet somit eine fehlerlose Übertragung, die nicht von anderen Sendern gestört ist.

Zusätzlich können im Empfänger und/oder in den Kameras Störerkennungsvorrichtungen vorhanden sein, die auf bekannte Weise erkennen, ob ein Bild- oder Steuersignal durch andere Sender ohne Identifikation gestört werden. Eine solche Störerkennungsvorrrichtung kann beispielsweise aus der Intensität des empfangenen Signals oder den darin enthaltenen Frequenzen erkennen, ob das Sigal durch Überlagerung oder ähnliches gestört ist. Auch in diesem Fall kann der Übertragungskanal gewechselt oder die Übertragung abgeschaltet werden, wobei die Fehlfunktion ebenfalls angezeigt werden kann.

## Patentansprüche

1. Kamerasystem, das umfaßt:
wenigstens eine Kamera (1a, 1b) zur Aufnahme und
drahtlosen Übertragung von Bildsignalen auf einem Übertragungskanal;
einen Empfänger (2) zum Empfangen und Darstellen der Bildsignale von der wenigstens einen Kamera;
**dadurch gekennzeichnet, daß**
der Empfänger umfaßt:
ein zuweisungsmittel zum zuweisen einer eindeutigen Identifikation an die wenigstens eine Kamera; und
ein erstes Identifikationsmittel zum Freigeben der Bildsignale nur dann, wenn eine zusammen mit den Bildsignalen gesendete Identifikation derjenigen entspricht, die der wenigstens einen Kamera zugewiesen ist; und daß
die wenigstens eine Kamera ein Mittel zum Speichern der zugewiesenen Identifikation und zum Senden dieser Identifikation zusammen mit den Bildsignalen aufweist.

2. Kamerasystem nach Anspruch 1, **dadurch gekennzeichnet, daß** es eine zweite Kamera (1b) umfaßt und das Zuweisungsmittel jeder Kamera eine eindeutige Identifikation zuweist.

3. Kamerasystem nach einem der vorhergehenden Ansprüchen, **dadurch gekennzeichnet, daß** der Empfänger ein Mittel zum Senden von Steuersignalen zusammen mit der Identifikation umfaßt, die der Kamera zugewiesen ist, an die die Steuersignale gerichtet sind, und daß wenigstens eine Kamera ein zweites Identifikationsmittel zum Erkennen umfaßt, ob eine zusammen mit einem Steuersignal gesendete Identifikation derjenigen entspricht, die der wenigstens einen Kamera zugewiesen ist.

4. Kamerasystem nach einem der vorhergehenden Ansprüchen, **dadurch gekennzeichnet, daß** die Identifikation zusammen mit dem Bild- und/oder Steuersignal kontinuierlich, quasi-kontinuierlich oder periodisch gesendet wird.

5. Kamerasystem nach einem der vorhergehenden Ansprüchen, **dadurch gekennzeichnet, daß** der Empfänger weiter eine Störerkennungsvorrichtung zum Erkennen einer Störung der Bildsignale durch andere Signale umfaßt.

6. Kamerasystem nach einem der vorhergehenden Ansprüchen, **dadurch gekennzeichnet, daß** wenigstens eine Kamera mittels einer Schnellmontagevorrichtung befestigbar ist.

7. Kamerasystem nach einem der vorhergehenden Ansprüchen, das weiter eine Ladestation (5) umfaßt, in der wenigstens eine Kamera (1a, 1b) aufnehmbar ist.

8. Nutzfahrzeug mit einem Kamerasystem nach einem der vorhergehenden Ansprüche.

9. Verfahren zum Betrieb eines Kamerasystems nach einem der vorhergehenden Ansprüche, das umfaßt:
Zuweisen einer eindeutigen Identifikation an wenigstens eine Kamera (1a, 1b);
Senden der Identifikation zusammen mit Bildsignalen durch die Kamera;
Empfangen der Bildsignale und der Identifikation durch einen Empfänger (2);
falls die Identifikation derjenigen entspricht, die der Kamera zugewiesen wurde, von der Bildsignale empfangen werden sollen: Freigeben der Übertragung der Bildsignale;
andernfalls Anzeigen einer Fehlfunktion und/oder Abschalten des Systems oder Wechseln des Übertragungskanals.
